(19) Europäisches Patentamt / European Patent Office / Office européen des brevets

(11) **EP 3 133 732 B1**

(12) **EUROPEAN PATENT SPECIFICATION**

(45) Date of publication and mention
of the grant of the patent:
**04.11.2020 Bulletin 2020/45**

(21) Application number: **14889556.8**

(22) Date of filing: **16.04.2014**

(51) Int Cl.:
**H02P 27/06** (2006.01)  **H02P 1/02** (2006.01)

(86) International application number:
**PCT/JP2014/060765**

(87) International publication number:
**WO 2015/159376 (22.10.2015 Gazette 2015/42)**

(54) **POWER CONVERSION DEVICE AND POWER CONVERSION METHOD**

STROMWANDLERVORRICHTUNG UND STROMUMWANDLUNGSVERFAHREN

DISPOSITIF DE CONVERSION DE PUISSANCE ET PROCÉDÉ DE CONVERSION DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.02.2017 Bulletin 2017/08**

(73) Proprietor: **Hitachi Industrial Equipment Systems
Co., Ltd.
Tokyo 101-0022 (JP)**

(72) Inventors:
• **SUGIMOTO Takuya
Tokyo 101-0022 (JP)**

• **ONUMA Yusaku
Tokyo 101-0022 (JP)**

(74) Representative: **Mewburn Ellis LLP
Aurora Building
Counterslip
Bristol BS1 6BX (GB)**

(56) References cited:
JP-A- H07 337 080      JP-A- H07 337 080
JP-A- H11 187 690      JP-A- 2003 259 699
JP-A- 2008 148 546     JP-A- 2008 148 546
US-A1- 2006 049 795

# Description

## TECHNICAL FIELD

The present invention relates to a power conversion device and a power conversion method.

## BACKGROUND ART

The background art of the present technical field includes PATENT LITERATURE 1. This patent publication describes "In an electric vehicle control device including a VVVF inverter that converts direct-current power into alternating-current power having an arbitrary frequency and inverter control means for feeding a gate instruction without detecting a rotational speed of an electric motor to variably output an output frequency and an output voltage of the VVVF inverter and driving the electric motor, the rotational speed of the electric motor is estimated based on a magnetic flux or an induced voltage of the electric motor." (see Abstract).

US 2006/049795 A1 describes a sensorless vector control method and a control apparatus for an alternating-current motor that can smoothly restart an alternating-current motor in the free running state. According to US 2006/049795 A1, before an alternating-current is started, the velocity of the alternating-current motor in the free running state is estimated and the alternating-current motor is operated at the estimated velocity to provide a smooth start.

JP 2008 148546 A describes a voltage command calculation means that outputs a voltage command such that at least one phase of a synchronous machine is shorted, at least once during the period from the actuation time up to a first time so that the maximum amplitude value of the current of the synchronous machine, which is detected by a current detecting means, is stored in a current amplitude storing means; a cut-off signal generating means that turns the cut-off signal on, during the interval from a first period, until a second period; wherein the voltage command calculating means outputs a voltage command applied to the synchronous machine such that the current of the synchronous machine obtained from the current detecting means becomes zero and that controls a power conversion means that would make the synchronous machine actuate, when the maximum amplitude value of the current, saved in the current amplitude storing means, is smaller than a prescribed value, in an interval from the second period until a third period

## CITATION LIST

## PATENT LITERATURE

PATENT LITERATURE 1: JP-A-2007-89269

## SUMMARY OF INVENTION

## TECHNICAL PROBLEM

Patent Literature 1 describes a method for determining a rotation condition of an electric motor. However, in the method for determining the rotation condition in Patent Literature 1, the rotational speed of the electric motor is estimated based on the magnetic flux or the induced voltage of the electric motor to determine the rotation condition during idling of a rotor, for example, so that it takes time before the rotation condition is determined. Thus, it is difficult to immediately obtain the rotation condition. In the estimation of the rotational speed to determine the rotation condition, the rotational speed may be erroneously estimated.

Therefore, the present invention is directed to providing a power conversion device capable of more quickly and more easily and reliably determining a rotation condition during idling of a rotor of an electric motor.

## SOLUTION TO PROBLEM

A power conversion device according to a first aspect of the invention is set out in claim 1.

A power conversion method according to a second aspect of the invention is set out in claim 9.

## ADVANTAGEOUS EFFECTS OF INVENTION

According to the present invention, there can be provided a power conversion device capable of more quickly and more easily and reliably determining a rotation condition even if the rotor of the electric motor is idling.

Problems, configurations, and effects other than those described above will be made clear from the following description of embodiments.

## BRIEF DESCRIPTION OF DRAWINGS

[FIG. 1] FIG. 1 is an example of a configuration diagram of a power conversion device according to an embodiment 1.
[FIG. 2] FIG. 2 is an example of a configuration diagram of an alternating-current motor condition determination unit in the power conversion device according to the embodiment 1.
[FIG. 3] FIG. 3 illustrates an example of processing of a configuration of an alternating-current motor condition determination processing unit 203 in an alternating-current motor condition determination unit 108 in the power conversion device according to the embodiment 1.
[FIG. 4] FIG. 4 illustrates an example of a simple equivalent circuit diagram corresponding to one phase illustrating a relationship between the power conversion device that applies an arbitrary voltage and a permanent magnet synchronous motor 105 in the embodiment 1.

[FIG. 5] FIG. 5 illustrates an example illustrating the relationship between current that flows when a voltage $V_l$ is applied and time during rotation of the permanent magnet synchronous motor 105 in the embodiment 1.

[FIG. 6] FIG. 6 is an example of a relationship diagram between current and time at the time when a voltage is applied to the permanent magnet synchronous motor 105 in the embodiment 1.

[FIG. 7] FIG. 7 is an example of a current growth diagram corresponding to a rotational frequency of the permanent magnet synchronous motor 105 under a specific condition in the embodiment 1.

[FIG. 8] FIG. 8 is a relationship diagram between applied voltage and current at the time when an alternating-current motor condition determination value and an alternating-current motor condition determination time in the power conversion device according to the embodiment 1 are respectively provided with arbitrary threshold values.

[FIG. 9] FIG. 9 is an example of a configuration diagram of a power conversion device according to an embodiment 2.

[FIG. 10] FIG. 10 is an example of a configuration diagram of an alternating-current motor condition determination unit in the power conversion device according to the embodiment 2.

DESCRIPTION OF EMBODIMENTS

Embodiments of the present invention will be described below with reference to the drawings.

EMBODIMENT 1

In the present embodiment, an example of the configuration of a power conversion device capable of determining the rotation condition of an alternating-current motor during idling will be described. As an application example of the present invention specifically considered, when an alternating-current motor is used for a fan use, a power conversion device is stopped while the alternating-current motor is idling with an external force (wind or the like) so that the rotation condition of the alternating-current motor cannot be known. When the present invention is applied, a method for starting the alternating-current motor when the alternating-current motor is idling and a method for starting the alternating-current motor when the alternating-current motor is stopped can be selected so that the alternating-current motor may not be unsuccessfully started.

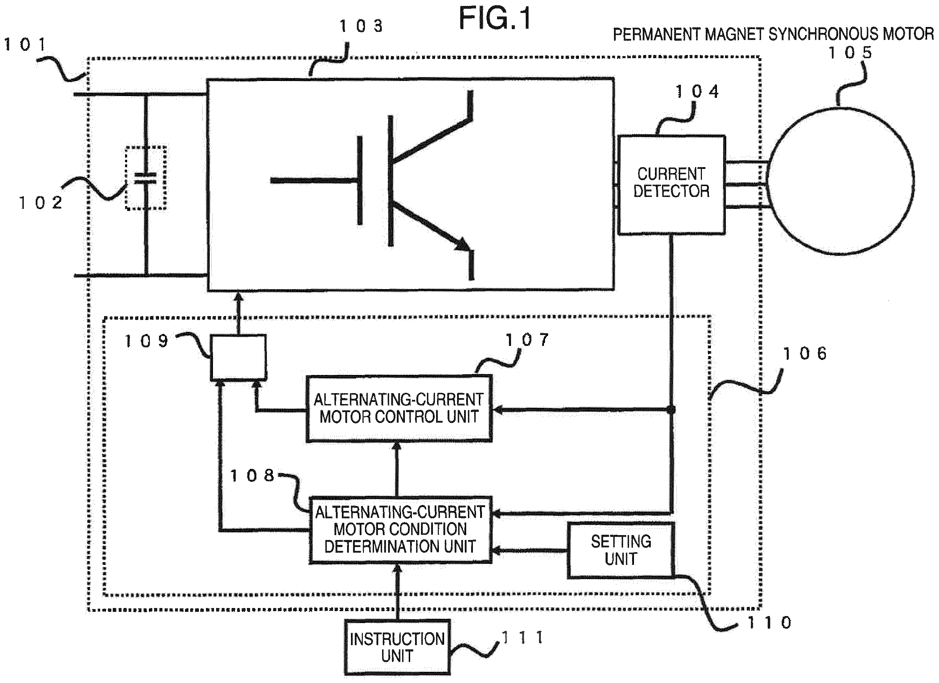

FIG. 1 is an example of a configuration diagram of a power conversion device according to an embodiment 1. A power conversion device 101, which drives a permanent magnet synchronous motor 105, includes a smoothing capacitor 102, a power converter 103, a current detector 104, and a control device 106.

The smoothing capacitor 102 may directly input a direct-current voltage without smoothing the direct-current voltage, although it is a smoothing capacitor for smoothing the direct-current voltage. The power converter 103 converts the direct-current voltage into an arbitrary voltage depending on the combination of on and off of a semiconductor switching element.

The current detector 104 is a shunt resistance or a Hall CT (Current Transformer), for example, and detects a three-phase output current of the power converter 103. The current detector 104 may detect only two phases and calculate the remaining one phase because the sum of three-phase alternating-currents is zero. The shunt resistance may be arranged at a positive polarity or a negative polarity of the input of the power converter 103, and the three-phase output current may be estimated from a current that flows in the shunt resistance.

The control device 106 includes an alternating-current motor control unit 107, an alternating-current motor condition determination unit 108, a gate signal control unit 109, and a setting unit 110. The alternating-current motor control unit 107 outputs a voltage instruction based on the three-phase output current to arbitrarily control the speed or the torque of the permanent magnet synchronous motor 105.

The alternating-current motor condition determination unit 108 receives each of setting values such as an alternating-current motor condition determination value and an alternating-current motor constant setting value from the setting unit 110, and the three-phase output current detected by the current detector 104, and upon receiving an instruction to perform rotation condition determination from an instruction unit 111, respectively outputs a rotation condition of the permanent magnet synchronous motor 105 and an interruption instruction to the alternating-current motor control unit 107 and the gate signal control unit 109. In the configuration according to the present embodiment, although the instruction unit 111 is configured outside the power conversion device 101, it may be configured inside the power conversion device 101.

The gate signal control unit 109 receives a voltage instruction from the alternating-current motor control unit 107, and controls on and off of the semiconductor switching element so that a voltage based on the voltage instruction is applied to the permanent magnet synchronous motor 105. The gate signal control unit 109 turns off all semiconductor switching elements so that application of voltage to the permanent magnet synchronous motor 105 is interrupted when it receives the interruption instruction from the alternating-current motor condition determination unit 108.

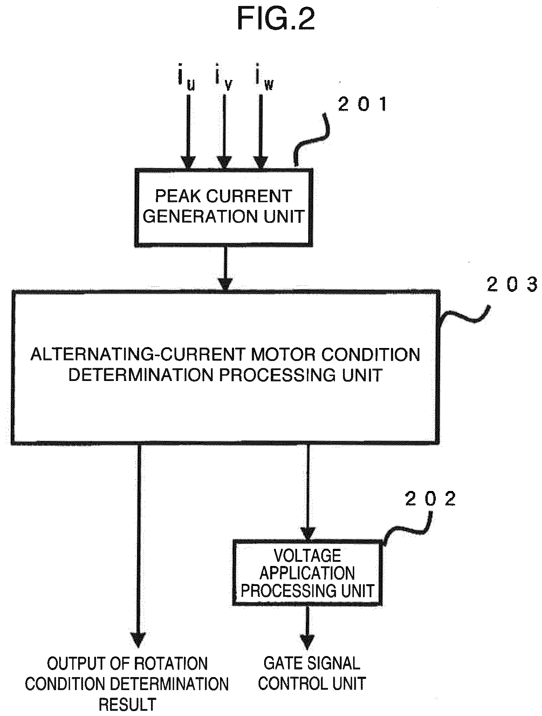

FIG. 2 is an example of a configuration diagram of the alternating-current motor condition determination unit 108 in the power conversion device illustrated in FIG.

1. If three-phase output currents $i_u$, $i_v$, and $i_w$, for example, are input to the alternating-current motor condition determination unit 108, a peak current generation unit 201 generates a peak current.

An alternating-current motor condition determination processing unit 203 receives the peak current generated by the peak current generation unit 201 illustrated in FIG. 2, an alternating-current motor constant, and the like, as inputs, and outputs a rotation condition determination result and a measurement condition. A voltage application processing unit 202 outputs an application instruction or an interruption instruction of an arbitrary voltage depending on the measurement condition. In this case, the arbitrary voltage to be applied may be a direct-current voltage or an alternating-current voltage. The voltage to be applied can also be arbitrarily determined by a user using a parameter or the like.

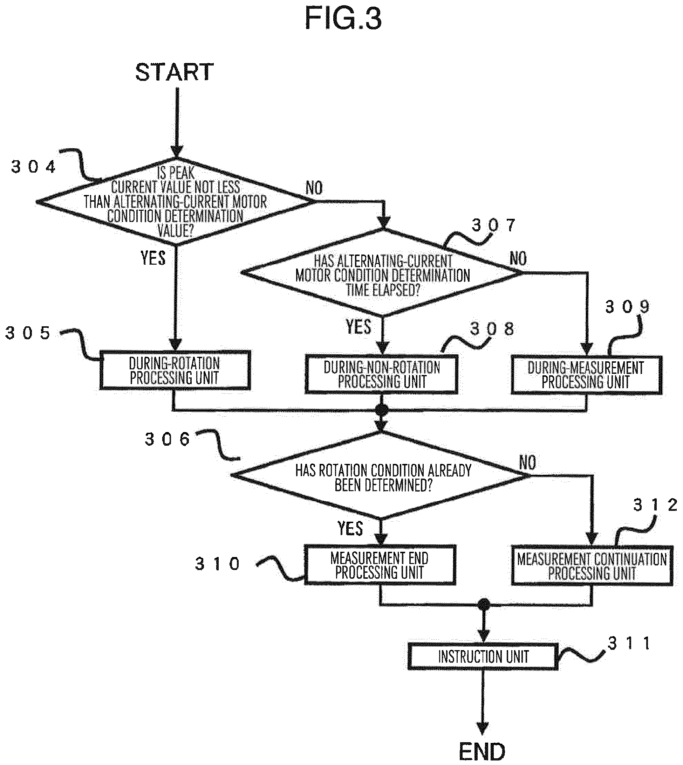

FIG. 3 illustrates an example of processing of a configuration of the alternating-current motor condition determination processing unit 203 in the alternating-current motor condition determination unit 108 in the power conversion device illustrated in FIG. 2. As internal processing of the alternating-current motor condition determination processing unit 203, an alternating-current motor condition determination value judgment processing unit 304 first judges whether a peak current value is not less than or more than a determination value, for example. The peak current value may be determined to be either not less than or more than an alternating-current motor condition determination value, and the judgment may be arbitrarily set and decided by the user using a parameter or the like. If the judgment result is "YES", a during-rotation processing unit 305 judges that the permanent magnet synchronous motor 105 is rotating. If the judgment result is "NO", an alternating-current motor condition determination time judgment processing unit 307 judges whether the peak current value is not less than or more than the determination value. The peak current value at the time when an alternating-current motor condition determination time has elapsed may be determined to be either not less than or more than the alternating-current motor condition determination value, and the judgment may be arbitrarily set and decided by the user using a parameter or the like. If the judgment result is "YES", a during-non-rotation processing unit 308 judges that the permanent magnet synchronous motor 105 is not rotating. If the judgment result is "NO", a during-measurement processing unit 309 judges that the rotation condition is being measured. A rotation condition determination end judgment processing unit 306 then judges whether the rotation condition has already been determined. If the judgment result is "YES", an interruption instruction is output to an instruction unit 311 via a measurement end processing unit 310, and a rotation condition determination result is also output simultaneously with the interruption instruction being output to the voltage application processing unit 202 illustrated in FIG. 2 from the instruction unit 311. If the judgment result is "NO", an application instruction is output to the instruction unit 311 via a measurement continuation processing unit 312, and the application instruction is output to the voltage application processing unit 202 illustrated in FIG. 2 from the instruction unit 311, to continue the measurement.

The alternating-current motor condition determination value used in the alternating-current motor condition determination value judgment processing unit 304 and the alternating-current motor condition determination time used in the alternating-current motor condition determination time judgment processing unit 307 will be described below.

For example, a voltage corresponding to an induced voltage constant Ke previously known as the alternating-current motor constant and a desired frequency can be determined by Expression 1. Here, the desired frequency may be set and decided by the user using 10% of a base frequency in the permanent magnet synchronous motor 105, a parameter, or the like, for example.

In Expression 1, Ke is an induced voltage constant of the permanent magnet synchronous motor 105, and f is a desired frequency.

[Expression 1]

$$V_J = 2\pi k_e f$$

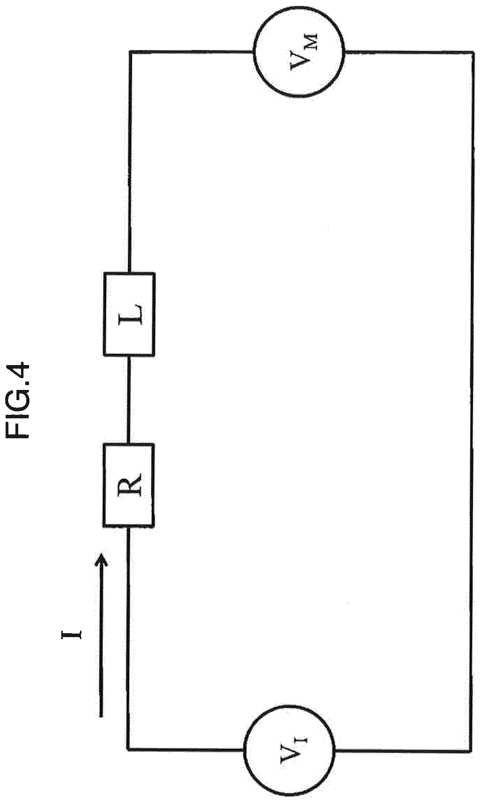

FIG. 4 is an example of a simple equivalent circuit diagram corresponding to one phase representing a relationship between the power conversion device that applies an arbitrary voltage and the permanent magnet synchronous motor 105 in the embodiment 1. In FIG. 4, $V_I$ is an arbitrary applied voltage, R is a winding resistance of the permanent magnet synchronous motor 105, L is a winding inductance of the permanent magnet synchronous motor 105, and $V_M$ is an induced voltage generated from the permanent magnet synchronous motor 105. A current I at this time flows by a difference between the arbitrary applied voltage $V_I$ and the induced voltage $V_M$ generated from the permanent magnet synchronous motor 105 and the winding resistance R and the winding inductance L of the permanent magnet synchronous motor 105.

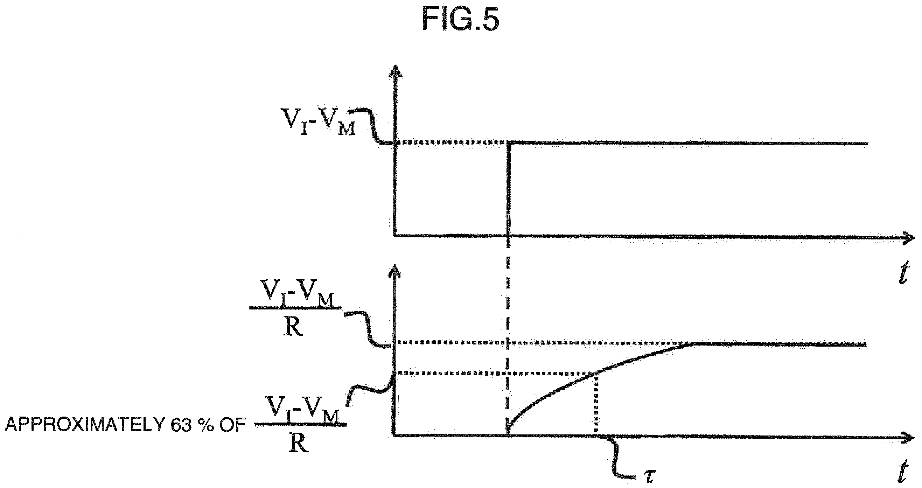

FIG. 5 illustrates an example representing a relationship between current that flows when the voltage $V_I$ is applied and time while the permanent magnet synchronous motor 105 is rotating in the embodiment 1. $V_M$ in the drawing is an effective value or a crest value of the induced voltage. When an arbitrary voltage is applied, a current, corresponding to the arbitrary applied voltage and the induced voltage generated by the permanent magnet synchronous motor 105, flows after a predetermined period of time has elapsed. At this time, a period of time required for growth to approximately 63% of the current that flows, i.e., a time constant τ can be derived by Expression 2 using a motor constant.

In Expression 2, L is a winding inductance of the permanent magnet synchronous motor 105, and R is a winding resistance of the permanent magnet synchronous motor 105.

[Expression 2]

$$\tau = \frac{L}{R}$$

While FIG. 5 illustrates an example of the time when a direct-current voltage is applied in the simple equivalent circuit corresponding to one phase, a multiple-phase (two-phase or three-phase) alternating-current can be similarly considered by setting a norm of the applied voltage to $V_I$ and setting a norm of the induced voltage to $V_M$.

When the existence of the relationship illustrated in FIG. 5, as described above, is utilized, the alternating-current motor condition determination value can be approximately 63% of a value derived from a voltage difference value between the arbitrary applied voltage and the induced voltage generated from the permanent magnet synchronous motor 105 and the winding resistance R of the permanent magnet synchronous motor 105. Here, the alternating-current motor condition determination value may be determined using Expression 1, and may be arbitrarily set and provided by the user using a parameter or the like.

The alternating-current motor condition determination time can be the time constant $\tau$ derived using Expression 2. The alternating-current motor condition determination time may be determined using Expression 2, or may be arbitrarily set and provided by the user using a parameter or the like.

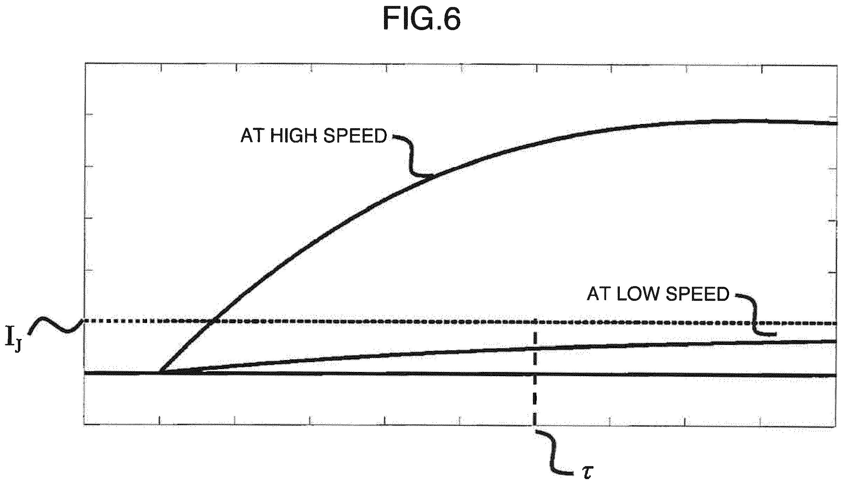

FIG. 6 is an example of a relationship diagram between a current and a time at the time when a voltage to which an alternating-current motor condition determination value is added is applied to the permanent magnet synchronous motor 105 in the embodiment 1. FIG. 6 illustrates a relationship between current and time at the time when the permanent magnet synchronous motor 105 is rotating at high speed and a relationship between current and time at the time when the permanent magnet synchronous motor 105 is rotating at low speed. In FIG. 6, $I_J$ is an alternating-current motor condition determination value derived using Expression 1.

At low speed, the induced voltage generated from the permanent magnet synchronous motor 105 is low. Thus, the current that flows is small, and becomes not more than or less than the alternating-current motor condition determination value even if the time constant $\tau$ elapses. That is, the frequency set using Expression 1 is a stop determination frequency below which the permanent magnet synchronous motor 105 is determined to have stopped rotating, and it is indicated that the permanent magnet synchronous motor 105 is rotating at not more than or less than the frequency so that the permanent magnet synchronous motor 105 can be determined to be not rotating.

On the other hand, at high speed, the induced voltage generated from the permanent magnet synchronous motor 105 is high. Thus, the current that flows is large, and becomes not less than or more than the alternating-current motor condition determination value before the time constant $\tau$ elapses. That is, it is indicated that the permanent magnet synchronous motor 105 is rotating at not less than or more than the frequency set using Expression 1 so that the permanent magnet synchronous motor 105 can be determined to be rotating.

Here, a relationship between frequency at which it is determined that the permanent magnet synchronous motor 105 is stopped at the alternating-current motor condition determination value and arbitrary voltage to be applied will be described using a specific example of numerical values. For example, a case where a stop determination frequency of the permanent magnet synchronous motor 105 is 10 Hz will be described. The stop determination frequency in this case may be arbitrarily determined by the user using a parameter or the like, or may be previously provided in this processing. A voltage to be applied is applied to the permanent magnet synchronous motor 105 by calculating a voltage corresponding to 5 Hz from the aforementioned stop determination frequency and Expression 1, for example. The voltage is set to $V_I$, and is applied to the permanent magnet synchronous motor 105. The alternating-current motor condition determination value $I_J$ is set to approximately 63% of a value derived from the applied voltage $V_I$ and the winding resistance R of the permanent magnet synchronous motor 105. A specific condition of numerical values, all the winding resistance R of the permanent magnet synchronous motor 105, the winding inductance L of the permanent magnet synchronous motor 105, the induced voltage constant Ke of the permanent magnet synchronous motor 105 are 1 for convenience of illustration.

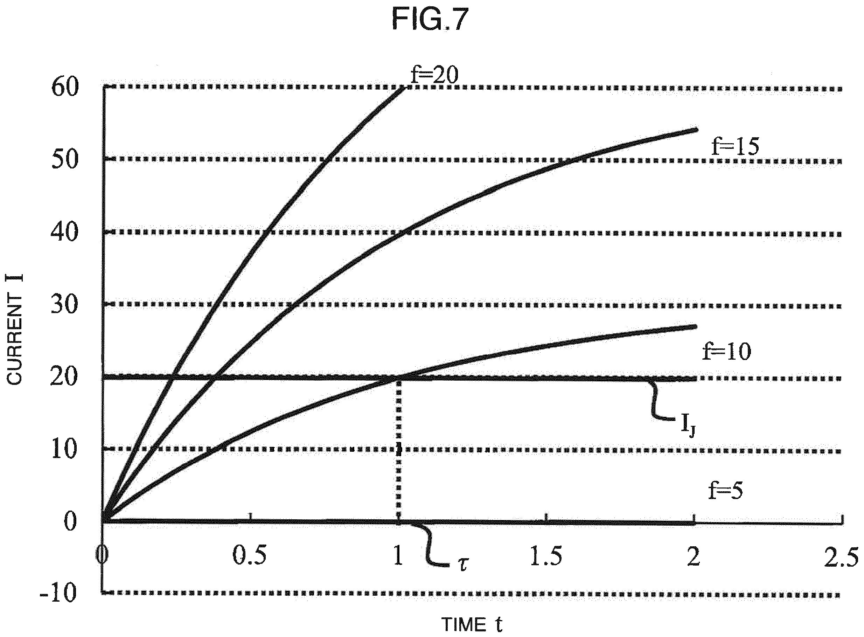

FIG. 7 is an example of a current growth diagram corresponding to a rotational frequency of the permanent magnet synchronous motor 105 during the specific condition in the embodiment 1. In FIG. 7, the alternating-current motor condition determination time $\tau$ becomes 1s from the aforementioned condition and Expression 2. If the rotational frequency of the permanent magnet synchronous motor 105 is higher than 10 Hz, it is found that the current value has exceeded an alternating-current motor condition determination value $I_J$ before the alternating-current motor condition determination time $\tau$ elapses. Accordingly, it can be determined that the permanent magnet synchronous motor 105 is rotating. If the rotational frequency of the permanent magnet synchronous motor 105 is lower than 10 Hz, the current value has not exceeded the alternating-current motor condition determination value $I_J$ when the alternating-current motor condition determination time $\tau$ has elapsed. Accordingly, it can be determined that the permanent magnet synchronous motor 105 is not rotating. If the rotational frequency of the permanent magnet synchronous motor 105 is 5 Hz, for example, the induced voltage of the permanent magnet synchronous motor 105 and the applied voltage Vi corresponding to 5 Hz are canceled by each other so that the current value becomes zero. While the voltage to be applied is derived after the stop determination frequency is determined in the aforementioned specific example, the stop determination frequency can also be found by back calculation from the voltage to be applied.

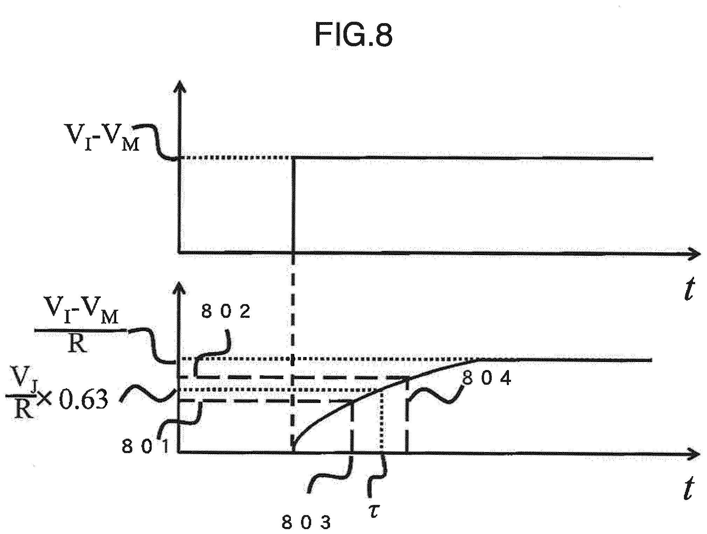

FIG. 8 is a relationship diagram between applied voltage and current at the time when an alternating-current motor condition determination value and an alternating-current motor condition determination time in the power conversion device according to the embodiment 1 are respectively provided with arbitrary threshold values. An alternating-current motor condition determination negative threshold value 801 can be - 5% of the alternating-current motor condition determination value illustrated in FIG. 5, for example, and an alternating-current motor condition determination positive threshold value 802 can be + 5% of the alternating-current motor condition determination value illustrated in FIG. 5, for example. Similarly, an alternating-current motor condition determination negative time threshold value 803 can be - 5% of the alternating-current motor condition determination time derived using Expression 2, for example, and an alternating-current motor condition determination positive time threshold value 804 can be + 5% of the alternating-current motor condition determination time derived using Expression 2, for example. The threshold values 801 and 802 and the time threshold values 803 and 804 can be respectively determined to be the same as the state determination value and the state determination time within ranges ($\pm$ 5%) respectively set by the threshold values so that determination considering a measurement error or the like can be performed. The alternating-current motor condition determination negative threshold value 801 and the alternating-current motor condition determination positive threshold value 802 and the alternating-current motor condition determination negative time threshold value 803 and the alternating-current motor condition determination positive time threshold value 804 may be respectively the same as or different from each other. The alternating-current motor condition determination negative threshold value 801 and the alternating-current motor condition determination positive threshold value 802 and the alternating-current motor condition determination negative time threshold value 803 and the alternating-current motor condition determination positive time threshold value 804 may be respectively arbitrarily set by the user using a parameter or the like.

As described above, the rotation condition can be determined depending on whether the current value of the current that flows by applying the arbitrary voltage has been not less than or more than the alternating-current motor condition determination value before the alternating-current motor condition determination time.

A method for restarting the permanent magnet synchronous motor 105 can be selected depending on a determination result. Specific examples of the restarting method include a method for restarting the permanent magnet synchronous motor 105 by increasing a frequency to be output from 0 Hz and a method for restarting the permanent magnet synchronous motor 105 while matching a frequency, a phase, and a rotational direction of its rotor. If a rotation condition determination result is "not rotating", for example, the permanent magnet synchronous motor 105 is restarted by gradually increasing the frequency from 0 Hz. When such a restarting method is adopted, the rotational frequency of the permanent magnet synchronous motor 105 need not be acquired. Therefore, the permanent magnet synchronous motor 105 can be restarted more quickly. If the rotation condition determination result is "rotating", for example, the permanent magnet synchronous motor 105 can be restarted while matching the frequency, phase, and rotational direction during idling of the rotor. When such a restarting method is adopted, the permanent magnet synchronous motor 105 can be smoothly restarted without an excessive load being applied thereto.

EMBODIMENT 2

In the present embodiment, portions common to those in the embodiment 1 will be described using similar reference signs, and portions different from those in the embodiment 1 will be specifically described.

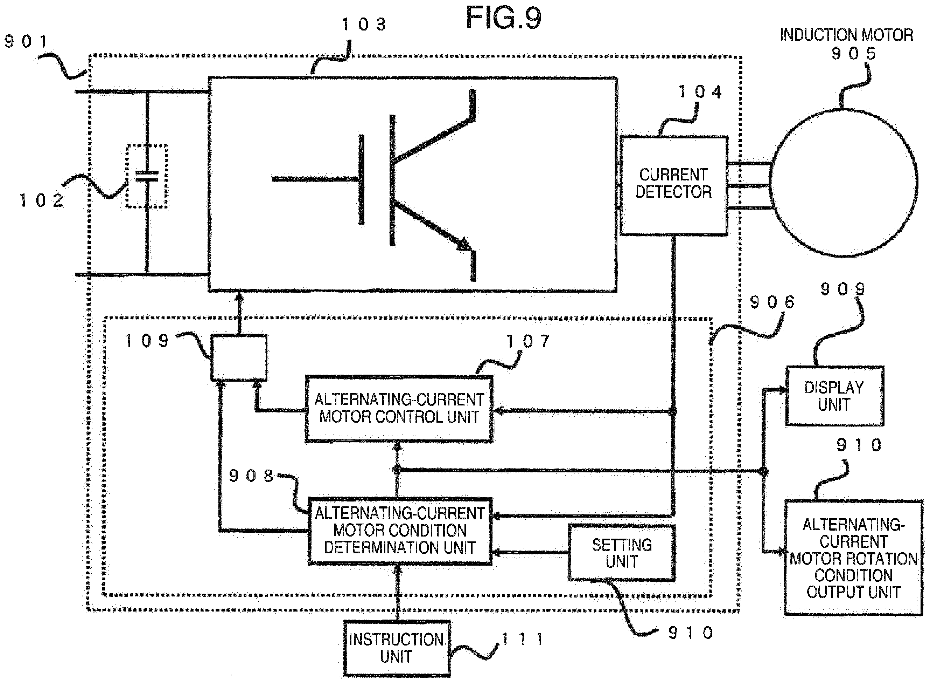

FIG. 9 is an example of a configuration diagram according to the present embodiment. A power conversion device 901, which drives an induction motor 905, includes a smoothing capacitor 102, a power converter 103, a current detector 104, and a control device 906. The control device 906 includes an alternating-current motor control unit 107, an alternating-current motor condition determination unit 908, a gate signal control unit 109, and a setting unit 910.

The alternating-current motor condition determination unit 908 receives each of setting values such as an alternating-current motor condition determination setting value and an alternating-current motor condition determination time setting value, and a three-phase output current, and upon receiving an instruction to perform rotation condition determination from an instruction unit 111, respectively outputs a rotation condition of the induction motor 905 and an interruption instruction to the alternating-current motor control unit 107 and the gate signal control unit 109.

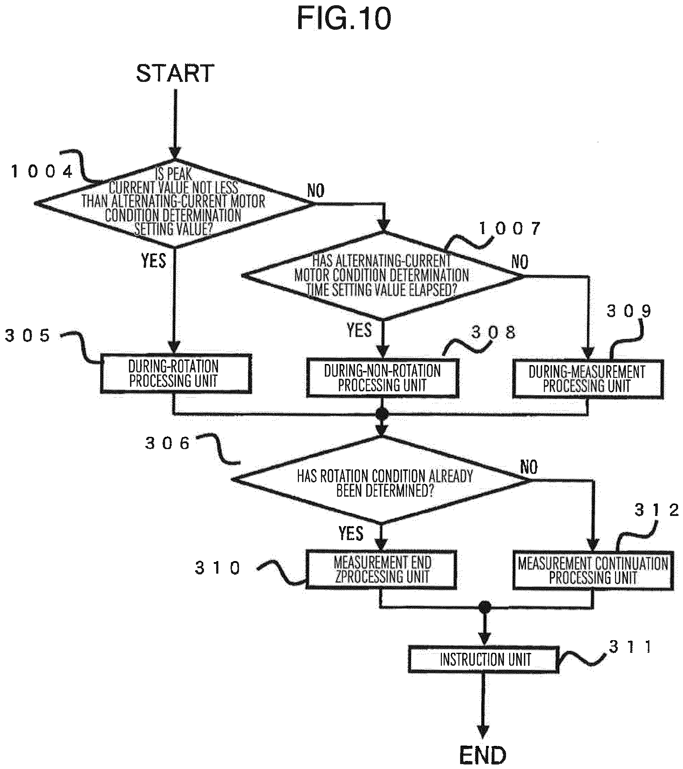

FIG. 10 is an example of a configuration diagram of the alternating-current motor condition determination unit 908. As internal processing of the alternating-current motor condition determination unit 908, an alternating-current motor condition determination value judgment processing unit 1004 first judges whether a peak current value is not less than or more than a setting value, for example. The peak current value may be determined to be either not less than or more than an alternating-current motor condition determination setting value, and the judgment may be arbitrarily set and decided by the user using a parameter or the like. If the judgment result is "YES", a during-rotation processing unit 305 judges that the induction motor 905 is rotating. If the judgment result is "NO", an alternating-current motor condition determination time judgment processing unit 1007 judges whether the peak current value is not less than or more than the setting value. The peak current value at the time when an alternating-current motor condition determination time has elapsed may be determined to be either not less than or more than the alternating-current motor condition determination setting value, and the judgment may be arbitrarily set and decided by the user using a parameter or the like. If the judgment result is "YES", a during-non-rotation processing unit 308 judges that the induction motor 905 is not rotating. If the judgment result is "NO", a during-measurement processing unit 309 judges that the rotation condition is being measured.

In FIG. 10 in the present embodiment, a method for determining a rotation condition of the induction motor 905, described below, is similar to that in the embodiment 1, and hence description thereof is not repeated. If voltage to be applied to the induction motor 905 during idling of its rotor may be derived using Expression 1 or derived by applying a value arbitrarily set by the user using a parameter or the like, like in the embodiment 1.

An alternating-current motor condition determination setting value in the alternating-current motor condition determination value judgment processing unit 904 in the alternating-current motor condition determination processing unit 1003 may be derived from an alternating-current motor constant or derived by using a value arbitrarily set by the user using a parameter or the like, like in the embodiment 1. An alternating-current motor condition determination time setting value in the alternating-current motor condition determination time judgment processing unit 1007 may be similarly derived from an alternating-current motor constant or derived using a value arbitrarily set by the user using a parameter or the like.

After the alternating-current motor rotation condition is determined, the alternating-current motor condition determination unit 908 notifies a display unit 909 illustrated in FIG. 9 of alternating-current motor rotation condition determination result information using communication or the like to display an alternating-current motor rotation condition, for example. The alternating-current motor condition determination unit 908 notifies an alternating-current motor rotation condition output unit 910 of the alternating-current motor rotation condition, and the alternating-current motor rotation condition output unit 910 outputs an alternating-current motor rotation condition signal to inform the user of the alternating-current motor rotation condition and notifies the alternating-current motor rotation condition signal to the outside via a terminal or the like.

While it is assumed that the alternating-current motor can be mainly represented by a general first-order lag system in the foregoing, and is described using a time constant $\tau$ and approximately 63% of a steady-state value, the present invention is not limited to this. Various modifications can be considered. For example, the time constant $\tau$ is replaced with a time ranging from 10% to 90% of the steady-state value, i.e., a rise time, and approximately 63% of the steady-state value is replaced with 50% of the steady-state value.

While a case where the present invention is applied to the permanent magnet synchronous motor and the induction motor has been described in the aforementioned embodiments, the present invention is also applicable to an electric motor, which is rotating or stopped with an external force with an induced voltage not generated, such as an alternating-current motor or a direct-current motor, or a synchronous motor not using a permanent magnet for its rotor. In the case of the induction motor, for example, there has been no residual voltage with an elapse of a period of time even if the induction motor is rotating with an external force. In the present invention, when a voltage is applied to the electric motor from the power conversion device even in such a case, a current from the electric motor can be detected so that the rotation condition can be determined.

Some or all of the aforementioned configurations, functions, processing units, processing means, and the like may be implemented by hardware by being designed using an integrated circuit, for example. Each of the aforementioned configurations and functions may be implemented by software by a processor interpreting and executing a program for implementing the function. Information on a program, a table, a file, and the like for implementing each of the functions can be placed on a recording device such as a memory, a hard disk, or an SSD (Solid State Drive) or a recording medium such as an IC (Integrated Circuit) card, an SD (Secure Digital) card, or a DVD (Digital Versatile Disk).

Control lines and information lines, which are considered to be required for description, are illustrated, and all control lines and information lines are not necessarily illustrated on products. Almost all of configurations may be considered to be actually connected to one another.

REFERENCE SIGNS LIST

| | |
|---|---|
| 101 | Power conversion device |
| 102 | Smoothing capacitor |
| 103 | Power converter |
| 104 | Current detector |
| 105 | Permanent magnet synchronous motor |
| 106 | Control device |
| 107 | Alternating-current motor control unit |
| 108 | Alternating-current motor condition determina- |

tion unit

| | |
|---|---|
| 109 | Gate signal control unit |
| 201 | Peak current generation unit |
| 202 | Voltage application processing unit |
| 203 | Alternating-current motor condition determination processing unit |
| 304 | Alternating-current motor condition determination value judgment processing unit |
| 305 | During-rotation processing unit |
| 306 | rotation condition determination end judgment processing unit |
| 307 | Alternating-current motor condition determination time judgment processing unit |
| 308 | During-non-rotation processing unit |
| 309 | During-measurement processing unit |
| 310 | Measurement end processing unit |
| 311 | Instruction unit |
| 312 | Measurement continuation processing unit |
| 801 | Alternating-current motor condition determination negative threshold value |
| 802 | Alternating-current motor condition determination positive threshold value |
| 803 | Alternating-current motor condition determination negative time threshold value |
| 804 | Alternating-current motor condition determination positive time threshold value |
| 901 | Power conversion device |
| 905 | Induction motor |
| 906 | Control device |
| 908 | Alternating-current motor condition determination unit |
| 909 | Display unit |
| 910 | Alternating-current motor rotation condition output unit |
| 1003 | Alternating-current motor condition determination processing unit |
| 1004 | Alternating-current motor condition determination value judgment processing unit |
| 1007 | Alternating-current motor condition determination time judgment processing unit |

**Claims**

1. A power conversion device (101) comprising:

   a power converter (103) configured to convert a direct-current or alternating-current voltage into an arbitrary voltage to drive an electric motor (105);
   a control device (106, 906) configured to control the power converter (103) to apply the arbitrary voltage to the electric motor (105); and
   a current detector (104) configured to detect or estimate a current that flows in the electric motor (105),
   wherein the control device (106, 906) is configured to apply the voltage to the electric motor (105) when the electric motor (105) is idling or stopped, and to determine a rotation condition of the electric motor (105) by comparing a current value of the current detected or estimated by the current detector (104) with a state determination value calculated based on the applied voltage; and
   the rotation condition of the electric motor (105) is determined by comparing the current value of the current detected or estimated by the current detector (104) with the state determination value at a time when a state determination time has elapsed;
   **characterized in that**:
   the state determination time is calculated using a voltage value of the voltage applied to the electric motor (105) and an electric motor constant of the electric motor (105).

2. The power conversion device (101) according to claim 1, wherein
   the voltage applied to the electric motor (105) from the power converter (103) when the electric motor (105) is idling or stopped has a voltage value calculated based on an electric motor constant and a stop determination frequency of the electric motor (105), the stop determination frequency being a frequency below which the electric motor (105) is determined to have stopped rotating.

3. The power conversion device (101) according to claim 1, wherein
   the electric motor (105) is determined to be in an idling condition when the current value of the current detected or estimated by the current detector (104) is more than the state determination value.

4. The power conversion device (101) according to claim 1, wherein
   the electric motor (105) is determined to be in a stopped condition when the current value of the current detected or estimated by the current detector (104) is less than the state determination value.

5. The power conversion device (101) according to claim 1, wherein
   the state determination time is provided with at least one threshold value (803, 804) in its vicinity.

6. The power conversion device (101) according to claim 1, wherein
   the state determination value is provided with at least one threshold value (801, 802) in its vicinity.

7. The power conversion device (101) according to claim 1, wherein
   a method for restarting the electric motor (105) is selected depending on a determination result of the rotation condition of the electric motor (105).

8. The power conversion device (101) according to claim 1, further comprising
a display unit (909) that displays information on the power conversion device (101), and
an output unit (910) that outputs the information on the power conversion device (101) to the outside, wherein information on the rotation condition of the electric motor (105) determined by the control device (106, 906) is displayed on the display unit (909) or is output to the outside from the output unit (910).

9. A power conversion method comprising the steps of:

converting a direct-current or alternating-current voltage into an arbitrary voltage;
controlling a power converter (103) to apply the arbitrary voltage to an electric motor (105); and detecting or estimating a current that flows in the electric motor (105),
wherein the voltage is applied to the electric motor (105) when the electric motor (105) is idling or stopped, and a rotation condition of the electric motor (105) is determined by comparing a current value of the detected or estimated current with a state determination value calculated based on the applied voltage; and
the rotation condition of the electric motor (105) is determined by comparing the current value of the detected or estimated current with the state determination value at a time when a state determination time has elapsed;
**characterized in that**:
the state determination time is calculated using a voltage value of the voltage applied to the electric motor (105) and an electric motor constant of the electric motor (105).

10. The power conversion method according to claim 9, wherein
the voltage applied to the electric motor (105) when the electric motor (105) is idling or stopped has a voltage value calculated based on an electric motor constant and a stop determination frequency of the electric motor (105), the stop determination frequency being a frequency below which the electric motor (105) is determined to have stopped rotating.

11. The power conversion method according to claim 9, wherein
the electric motor (105) is determined to be in an idling condition when the current value of the detected or estimated current is more than the state determination value, and the electric motor (105) is determined to be in a stopped condition when the current value of the detected or estimated current is less than the state determination value.

12. The power conversion method according to claim 9, further comprising
selecting a method for restarting the electric motor (105) depending on a determination result of the rotation condition of the electric motor (105).

13. The power conversion method according to claim 9, further comprising
displaying information on the determined rotation condition of the electric motor (105) or outputting the displayed information to the outside.

**Patentansprüche**

1. Leistungswandlervorrichtung (101), die Folgendes umfasst:

einen Leistungswandler (103), der ausgelegt ist, um eine Gleichstrom- oder Wechselstromspannung in eine beliebige Spannung umzuwandeln, um einen Elektromotor (105) anzutreiben;
eine Steuervorrichtung (106, 906), die ausgelegt ist, um den Leistungswandler (103) zu steuern, um den Elektromotor (105) mit der beliebigen Spannung zu beaufschlagen; und
einen Stromdetektor (104), der ausgelegt ist, um einen Strom, der in dem Elektromotor (105) fließt, zu detektieren oder zu schätzen,
wobei die Steuervorrichtung (106, 906) ausgelegt ist, um den Elektromotor (105) mit der Spannung zu beaufschlagen, wenn der Elektromotor (105) im Leerlauf läuft oder angehalten wurde, und einen Drehzustand des Elektromotors (105) durch Vergleichen eines Stromwerts des durch den Stromdetektor (104) detektierten oder geschätzten Stroms mit einem Zustandsbestimmungswert, der basierend auf der beaufschlagten Spannung berechnet wurde, zu bestimmen; und
wobei der Drehzustand des Elektromotors (105) durch Vergleichen des Stromwerts des durch den Stromdetektor (104) detektierten oder geschätzten Stroms mit dem Zustandsbestimmungswert zu einem Zeitpunkt bestimmt wird, wenn eine Zustandsbestimmungszeit abgelaufen ist;
**dadurch gekennzeichnet, dass**:
die Zustandsbestimmungszeit unter Verwendung eines an den Elektromotor (105) angelegten Spannungswerts der Spannung und einer Elektromotorkonstante des Elektromotors (105) berechnet wird.

2. Leistungswandlervorrichtung (101) nach Anspruch 1, wobei
die an den Elektromotor (105) von dem Leistungswandler (103) angelegte Spannung, wenn der Elek-

9

tromotor (105) im Leerlauf läuft oder angehalten wurde, einen Spannungswert aufweist, der basierend auf einer Elektromotorkonstante und einer Anhaltebestimmungsfrequenz des Elektromotors (105) berechnet wird, wobei die Anhaltebestimmungsfrequenz eine Frequenz ist, unterhalb der bestimmt wird, dass der Elektromotor (105) nicht mehr rotiert.

3. Leistungswandlervorrichtung (101) nach Anspruch 1, wobei

bestimmt wird, dass der Elektromotor (105) im Leerlauf läuft, wenn der Stromwert des durch den Stromdetektor (104) detektierten oder geschätzten Stroms höher ist als der Zustandsbestimmungswert.

4. Leistungswandlervorrichtung (101) nach Anspruch 1, wobei

bestimmt wird, dass sich der Elektromotor (105) in einem angehaltenen Zustand befindet, wenn der Stromwert des durch den Stromdetektor (104) detektierten oder geschätzten Stroms kleiner ist als der Zustandsbestimmungswert.

5. Leistungswandlervorrichtung (101) nach Anspruch 1, wobei

die Zustandsbestimmungszeit mit zumindest einem Schwellenwert (803, 804) in dessen Nähe bereitgestellt ist.

6. Leistungswandlervorrichtung (101) nach Anspruch 1, wobei

der Zustandsbestimmungswert mit zumindest einem Schwellenwert (801, 802) in dessen Nähe bereitgestellt ist.

7. Leistungswandlervorrichtung (101) nach Anspruch 1, wobei

ein Verfahren zum erneuten Starten des Elektromotors (105) abhängig von einem Bestimmungsergebnis des Drehzustands des Elektromotors (105) ausgewählt wird.

8. Leistungswandlervorrichtung (101) nach Anspruch 1, die ferner Folgendes umfasst:

eine Anzeigeeinheit (909), die Informationen zur Leistungswandlervorrichtung (101) anzeigt, und eine Ausgabeeinheit (910), die die Informationen zur Leistungswandlervorrichtung (101) nach außen ausgibt, wobei Informationen zum Drehzustand des Elektromotors (105), der durch die Steuervorrichtung (106, 906) bestimmt wurde, auf der Anzeigeeinheit (909) angezeigt oder von der Ausgabeeinheit (910) nach außen ausgegeben wird.

9. Leistungswandlerverfahren, das die folgenden Schritte umfasst:

Umwandeln einer Gleichstrom- oder Wechselstromspannung in eine beliebige Spannung; Steuern eines Leistungswandlers (103), um an einen Elektromotor (105) die beliebige Spannung anzulegen; und Detektieren oder Schätzen eines Stroms, der in dem Elektromotor (105) fließt, wobei an den Elektromotor (105) die Spannung angelegt wird, wenn der Elektromotor (105) im Leerlauf läuft oder angehalten wurde, und ein Drehzustand des Elektromotors (105) durch Vergleichen eines Stromwerts des detektierten oder geschätzten Stroms mit einem Zustandsbestimmungswert, der basierend auf der angelegten Spannung berechnet wurde, bestimmt wird; und wobei der Drehzustand des Elektromotors (105) durch Vergleichen des Stromwerts des detektierten oder geschätzten Stroms mit dem Zustandsbestimmungswert zu einem Zeitpunkt bestimmt wird, wenn eine Zustandsbestimmungszeit abgelaufen ist; **dadurch gekennzeichnet, dass**: die Zustandsbestimmungszeit unter Verwendung eines an den Elektromotor (105) angelegten Spannungswerts der Spannung und einer Elektromotorkonstante des Elektromotors (105) berechnet wird.

10. Leistungswandlerverfahren nach Anspruch 9, wobei die an den Elektromotor (105) angelegte Spannung, wenn der Elektromotor (105) im Leerlauf läuft oder angehalten wurde, einen Spannungswert aufweist, der basierend auf der Elektromotorkonstante und einer Anhaltebestimmungsfrequenz des Elektromotors (105) berechnet wurde, wobei die Anhaltebestimmungsfrequenz eine Frequenz ist, unterhalb der bestimmt wird, dass sich der Elektromotor (105) nicht mehr dreht.

11. Leistungswandlerverfahren nach Anspruch 9, wobei bestimmt wird, dass der Elektromotor (105) im Leerlauf läuft, wenn der Stromwert des detektierten oder geschätzten Stroms höher ist als der Zustandsbestimmungswert, und wobei bestimmt wird, dass sich der Elektromotor (105) in einem angehaltenen Zustand befindet, wenn der Stromwert des detektierten oder geschätzten Stroms kleiner ist als der Zustandsbestimmungswert.

12. Leistungswandlerverfahren nach Anspruch 9, das ferner Folgendes umfasst:
das Auswählen eines Verfahrens zum erneuten Starten des Elektromotors (105) abhängig von einem Bestimmungsergebnis des Drehzustands des Elektromotors (105).

**13.** Leistungswandlerverfahren nach Anspruch 9, das ferner Folgendes umfasst:

das Anzeigen von Informationen zu dem bestimmten Drehzustand des Elektromotors (105) oder das Ausgeben der angezeigten Informationen nach außen.

## Revendications

**1.** Dispositif de conversion de puissance (101), comprenant :

un convertisseur de puissance (103) configuré pour convertir une tension de courant continu ou de courant alternatif en une tension arbitraire pour entraîner un moteur électrique (105) ;

un dispositif de commande (106, 906) configuré pour commander le convertisseur de puissance (103) afin d'appliquer la tension arbitraire au moteur électrique (105) ; et

un détecteur de courant (104) configuré pour détecter ou estimer un courant qui circule dans le moteur électrique (105),

dans lequel le dispositif de commande (106, 906) est configuré pour appliquer la tension au moteur électrique (105) lorsque le moteur électrique (105) est au ralenti ou arrêté, et pour déterminer une condition de rotation du moteur électrique (105) en comparant un valeur actuelle du courant détecté ou estimé par le détecteur de courant (104) avec une valeur de détermination d'état calculée sur la base de la tension appliquée ; et

la condition de rotation du moteur électrique (105) est déterminée en comparant la valeur actuelle du courant détecté ou estimé par le détecteur de courant (104) avec la valeur de détermination d'état à un moment où un temps de détermination d'état s'est écoulé ;

**caractérisé en ce que** :

le temps de détermination d'état est calculé en utilisant une valeur de tension de la tension appliquée au moteur électrique (105) et une constante de moteur électrique du moteur électrique (105).

**2.** Dispositif de conversion de puissance (101) selon la revendication 1, dans lequel

la tension appliquée au moteur électrique (105) par le convertisseur de puissance (103) lorsque le moteur électrique (105) est au ralenti ou arrêté a une valeur de tension calculée sur la base d'une constante de moteur électrique et d'une fréquence de détermination d'arrêt du moteur électrique (105), la fréquence de détermination d'arrêt étant une fréquence en dessous de laquelle il est déterminé que le moteur électrique (105) a cessé de tourner.

**3.** Dispositif de conversion de puissance (101) selon la revendication 1, dans lequel

le moteur électrique (105) est déterminé comme étant dans une condition de ralenti lorsque la valeur actuelle du courant détecté ou estimé par le détecteur de courant (104) est supérieure à la valeur de détermination d'état.

**4.** Dispositif de conversion de puissance (101) selon la revendication 1, dans lequel

le moteur électrique (105) est déterminé comme étant dans une condition arrêtée lorsque la valeur actuelle du courant détecté ou estimé par le détecteur de courant (104) est inférieure à la valeur de détermination d'état.

**5.** Dispositif de conversion de puissance (101) selon la revendication 1, dans lequel

le temps de détermination d'état est pourvu d'au moins une valeur de seuil (803, 804) à sa proximité.

**6.** Dispositif de conversion de puissance (101) selon la revendication 1, dans lequel

la valeur de détermination d'état est pourvue d'au moins une valeur de seuil (801, 802) à sa proximité.

**7.** Dispositif de conversion de puissance (101) selon la revendication 1, dans lequel

un procédé pour redémarrer le moteur électrique (105) est sélectionné en fonction d'un résultat de détermination de la condition de rotation du moteur électrique (105).

**8.** Dispositif de conversion de puissance (101) selon la revendication 1, comprenant en outre une unité d'affichage (909) qui affiche des informations sur le dispositif de conversion de puissance (101), et

une unité de sortie (910) qui délivre en sortie les informations sur le dispositif de conversion de puissance (101) vers l'extérieur,

dans lequel des informations sur la condition de rotation du moteur électrique (105) déterminée par le dispositif de commande (106, 906) sont affichées sur l'unité d'affichage (909) ou sont délivrées en sortie vers l'extérieur depuis l'unité de sortie (910).

**9.** Procédé de conversion de puissance comprenant les étapes consistant à :

convertir une tension de courant continu ou courant alternatif en une tension arbitraire ;

commander un convertisseur de puissance (103) pour appliquer la tension arbitraire à un moteur électrique (105) ; et

détecter ou estimer un courant qui circule dans le moteur électrique (105),

dans lequel la tension est appliquée au moteur électrique (105) lorsque le moteur électrique (105) est au ralenti ou arrêté, et une condition de rotation du moteur électrique (105) est déterminée en comparant un valeur actuelle du courant détecté ou estimé avec une valeur de détermination d'état calculée sur la base de la tension appliquée ; et

la condition de rotation du moteur électrique (105) est déterminée en comparant la valeur actuelle du courant détecté ou estimé avec la valeur de détermination d'état à un moment où un temps de détermination d'état s'est écoulé ;

**caractérisé en ce que** :

le temps de détermination d'état est calculé en utilisant une valeur de tension de la tension appliquée au moteur électrique (105) et une constante de moteur électrique du moteur électrique (105).

10. Procédé de conversion de puissance selon la revendication 9, dans lequel

la tension appliquée au moteur électrique (105) lorsque le moteur électrique (105) est au ralenti ou arrêté a une valeur de tension calculée sur la base d'une constante de moteur électrique et d'une fréquence de détermination d'arrêt du moteur électrique (105), la fréquence de détermination d'arrêt étant une fréquence en dessous de laquelle il est déterminé que le moteur électrique (105) a cessé de tourner.

11. Procédé de conversion de puissance selon la revendication 9, dans lequel

le moteur électrique (105) est déterminé comme étant dans une condition de ralenti lorsque la valeur actuelle du courant détecté ou estimé est supérieure à la valeur de détermination d'état, et le moteur électrique (105) est déterminé comme étant dans une condition arrêtée lorsque la valeur de courant du courant détecté ou estimé est inférieure à la valeur de détermination d'état.

12. Procédé de conversion de puissance selon la revendication 9, comprenant en outre une sélection d'un procédé pour redémarrer le moteur électrique (105) en fonction d'un résultat de détermination de la condition de rotation du moteur électrique (105).

13. Procédé de conversion de puissance selon la revendication 9, comprenant en outre un affichage d'informations sur la condition de rotation déterminée du moteur électrique (105) ou une délivrance en sortie des informations affichées vers l'extérieur.

FIG.1

# FIG.2

$i_u$  $i_v$  $i_w$

2 0 1

PEAK CURRENT
GENERATION UNIT

2 0 3

ALTERNATING-CURRENT MOTOR CONDITION
DETERMINATION PROCESSING UNIT

2 0 2

VOLTAGE
APPLICATION
PROCESSING UNIT

OUTPUT OF ROTATION
CONDITION DETERMINATION
RESULT

GATE SIGNAL
CONTROL UNIT

# FIG.3

START

304 — IS PEAK CURRENT VALUE NOT LESS THAN ALTERNATING-CURRENT MOTOR CONDITION DETERMINATION VALUE?

NO

307 — HAS ALTERNATING-CURRENT MOTOR CONDITION DETERMINATION TIME ELAPSED?

NO

YES

YES

305 — DURING-ROTATION PROCESSING UNIT

308 — DURING-NON-ROTATION PROCESSING UNIT

309 — DURING-MEASUREMENT PROCESSING UNIT

306 — HAS ROTATION CONDITION ALREADY BEEN DETERMINED?

NO

YES

310 — MEASUREMENT END PROCESSING UNIT

312 — MEASUREMENT CONTINUATION PROCESSING UNIT

311 — INSTRUCTION UNIT

END

FIG.4

# FIG.5

$V_I\text{-}V_M$

$t$

$\dfrac{V_I\text{-}V_M}{R}$

APPROXIMATELY 63 % OF $\dfrac{V_I\text{-}V_M}{R}$

$\tau$

$t$

EP 3 133 732 B1

## FIG.6

AT HIGH SPEED

AT LOW SPEED

$I_J$

$\tau$

EP 3 133 732 B1

# FIG.7

EP 3 133 732 B1

# FIG.8

# FIG.9

INDUCTION MOTOR
905

901

103

104

CURRENT
DETECTOR

102

906

909

109

DISPLAY
UNIT

107

ALTERNATING-CURRENT
MOTOR CONTROL UNIT

910

908

ALTERNATING-CURRENT
MOTOR CONDITION
DETERMINATION UNIT

SETTING
UNIT

ALTERNATING-
CURRENT
MOTOR ROTATION
CONDITION
OUTPUT UNIT

INSTRUCTION
UNIT

111

910

EP 3 133 732 B1

# FIG.10

START

1004 — IS PEAK CURRENT VALUE NOT LESS THAN ALTERNATING-CURRENT MOTOR CONDITION DETERMINATION SETTING VALUE?

NO

YES

1007 — HAS ALTERNATING-CURRENT MOTOR CONDITION DETERMINATION TIME SETTING VALUE ELAPSED?

NO

YES

309

305 — DURING-ROTATION PROCESSING UNIT

308 — DURING-NON-ROTATION PROCESSING UNIT

309 — DURING-MEASUREMENT PROCESSING UNIT

306 — HAS ROTATION CONDITION ALREADY BEEN DETERMINED?

NO

YES

312

310 — MEASUREMENT END ZPROCESSING UNIT

312 — MEASUREMENT CONTINUATION PROCESSING UNIT

INSTRUCTION UNIT — 311

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006049795 A1
- JP 2008148546 A

- JP 2007089269 A